# EUROPEAN PATENT SPECIFICATION

(11) **EP 1 523 970 B1**
(45) Date of publication and mention of the grant of the patent: **13.08.2008**
(21) Application number: 04024428.7
(22) Date of filing: 13.10.2004
(51) Int. Cl.: A61G 5/04, A61G 5/08

(54) **Powered vehicle for personal mobility**
Motorfahrzeug für den Individualtransport
Véhicule motorisé pour transporter une personne

(30) Priority: 13.10.2003 GB 0323854
(43) Date of publication of application: 20.04.2005
(73) Proprietor: SUNRISE MEDICAL LIMITED, Wollaston, West Midlands DY8 4PS (GB)
(72) Inventor: Menear, Robert, High St, Wollaston West Midlands DY8 4PS (GB)
(74) Representative: Wardley, Diana Mary

(56) References cited:
- WO-A-20/04065173
- DE-U- 29 917 475
- GB-A- 2 326 138
- US-A- 5 020 624
- US-A- 6 135 222

## Description

This invention relates to a powered vehicle for personal mobility, which includes first and second frame parts, respectively provided with ground-engaging wheels, and inter-engaging formations providing a releasable connection therebetween.

The invention has been devised in relation to such a vehicle whose purpose is to carry a person whose mobility is impaired, namely a wheelchair. However, it is to be appreciated that the invention may also be applicable to other such vehicles, e.g. of the "powered scooter" type. Many such vehicles are adapted to be dismantled into two, or possibly more, parts which being individually smaller and lighter than the complete vehicle enables the vehicle more readily to be stored, or transported in another vehicle. In the vehicle described hereafter, this dismantling involves the removal of a drive assembly from the remainder of the vehicle.

GB 2326138A discloses a personal mobility vehicle with separable front and rear parts. The parts are connected by respective lower and upper elements, the upper elements including a tubular member which comes into alignment with a tubular seat support, so that an elongate member attached to the base of the seat can be passed through the tubular member into the seat support. Whilst such connection is effective, it is not always easy to place an elongate member into two tubular parts which might not be correctly aligned with one another.

It is broadly the object of the present invention to provide an improved arrangement by which the releasable connection between first and second frame parts of such a dismantleable vehicle can be provided. According to the invention, we provide a vehicle for personal mobility as claimed, including first and second frame parts, respectively provided with ground-engaging wheels, and having inter-engaging formations providing a releasable connection between the frame parts, the formations comprising respective first formations on the frame parts, which formations when engaged with one another constrain the frame parts to angular movement relative to one another about an axis, and respective second formations spaced from the axis and which, when engaged with one another, hold the frame parts in a fixed relationship to one another in which the first formations cannot be disengaged; characterised in that the second formations include at least one projection on one frame part engageable in at least one complementary recess in the other frame part by said angular movement between the frame parts; and at least one catch member which is provided on the other frame part and is engageable with the at least one projection, for holding the projection(s) in the recess(es).

When the first and second formations are engaged with one another resilient means may be engaged between the frame parts. The resilient means may comprise at least one resilient member, spaced from the axis and arranged to be compressed between facing portions of the first and second frame parts when the second formations are engaged.

The frame parts may be front and rear frame parts of the vehicle, and the axis extend transversely of the vehicle.

The first formations may comprise at least one recess formation on one frame part and at least one engaging member on the other frame part, respectively engageable in the at least one recess formation. Preferably there are two recess formations spaced laterally of the one frame part, and complementary engaging members spaced laterally of the other frame part.

Conveniently the recess formations open downwardly, so as to be able to be placed over the engagement members.

The vehicle may be a wheelchair, particularly a powered wheelchair in which case one of the frame parts may comprise a removable drive assembly comprising an electric motor or motors for driving wheels provided at the sides of the drive assembly, and preferably also one or more electrical storage batteries to provide a power source therefor.

The invention will now be described by way of example with reference to the accompanying drawings, of which:
Figure 1 is a diagrammatic side elevation of a vehicle in accordance with the invention;
Figure 2 is an enlarged and more detailed view of part of the vehicle of Figure 1;
Figure 3 is a perspective view of a front frame part of the vehicle, in isolation;
Figure 4 is a view as Figure 3 but showing it connected to a complementary part of the drive assembly of the vehicle.

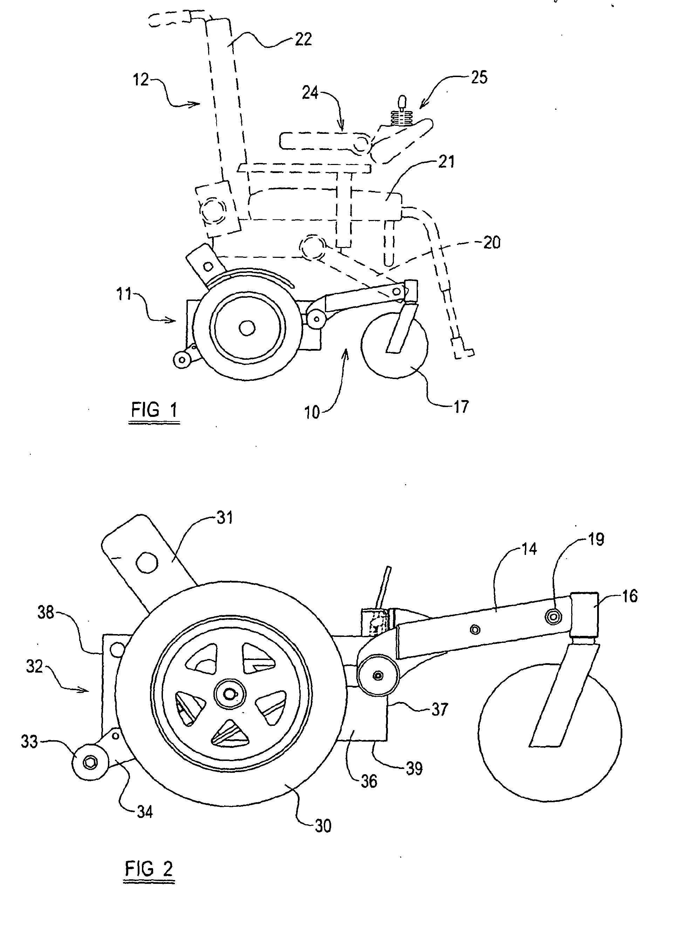

Referring firstly to Figure 1 of the drawings, this shows in side elevation an example of an electrically propelled personal mobility vehicle, namely a wheelchair, in accordance with the invention. It comprises a front frame or chassis part indicated generally at 10 and a drive assembly indicated generally at 11, these main parts being releasably connected together. The frame part 10 supports a seat indicated in outline at 12, for occupation by a user of the wheelchair.

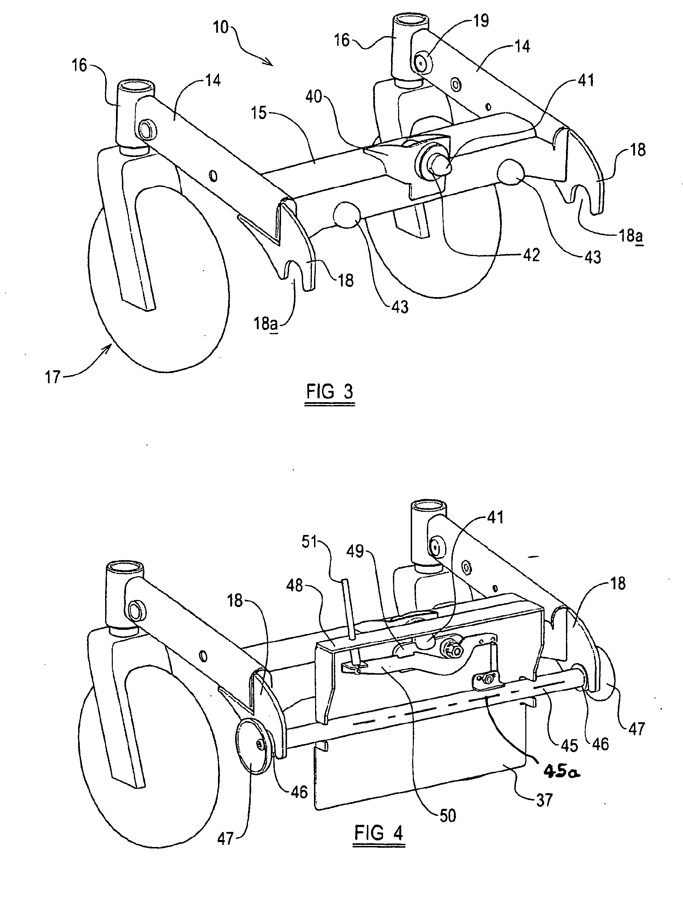

In greater detail, with additional reference to Figures 2 and 3 of the drawings, the frame or chassis part 10 includes first and second main frame members 14 which are provided one at each side of the wheelchair, extending forwardly and rearwardly thereof and parallel or generally parallel to one another. The frame members 14 are connected to one another by transversely extending frame members one of which is indicated at 15. The frame members 14 carry at their front ends respective pivotal supports 16 for front castor wheels 17, enabling the castor wheels to pivot about respective vertical or generally vertical axes. At their rearmost ends, the frame members 14 are arranged to be detachably connected to the drive assembly 11, enabling the wheelchair to be dismantled for storage. The seat assembly 12 is connected to the frame part 10 of the wheelchair by link members 20 which are pivotally connected at 19 to the frame members 14, there being means (not shown) for fixing the link members 20 at an appropriate inclination thereby enabling the height of the seat 12 to be adjusted.

The seat assembly 12 comprises, as is known for a wheelchair seat, a base 21, backrest 22, footrests 23, and armrests 24. A joystick control indicated generally at 25 may be mounted to one of the armrests 24, for controlling the wheelchair.

The drive assembly 11 comprises laterally spaced drive wheels 30 which are independently drivable by respective electric motors 31 through appropriate reduction gearboxes. The wheels 30 and motors 31 are carried on respective arms 34 which at their front ends are pivotally mounted to a box-like chassis structure 32, the pivoting of the arms 34 being controlled by respective spring/damper units to provide an effective suspension action for this part of the wheelchair. The chassis structure 32 comprises spaced side walls 36, a front wall 37 and a rear wall 38 and a closed base 39, so that an enclosed space is defined in which one or more electrical storage batteries may be accommodated for providing electrical power for the motors 31 and any other electrically-operated functions of the wheelchair. The joystick control 25 is connected electrically to the motors 31 and their power source by appropriate cables, including one or more releasable connectors in order to accommodate the disengagement of the frame part 10 from the drive assembly when required. It controls forwards, rearwards, and steering of the vehicle by appropriate supply of electrical power to the motors 31 at opposite sides of the vehicle, in known manner.

Rearwardly of the wheels 30 the arms 34 carry rear support wheels 33. These wheels 33 have two purposes, firstly to assist in prevention of the wheelchair's tipping over rearwardly if an attempt is made to climb an upwards slope of too great an inclination, a secondly to support the drive assembly when it is disconnected from the frame part 10 in a suitable orientation for easy connection thereto, specifically with the front of the drive assembly tilted slightly upwardly from the orientation it assumes when it is connected to the frame part 10.

Referring now to Figures 3 and 4 of the drawings, these illustrate that at their rearmost ends the frame members 14 of the frame part 10 are provided with members 18 which are somewhat hook-shaped, affording formations comprising downwardly-facing generally U-shaped recesses 18a. Above the level of the centres of the recesses 18a a sheet-metal bracket 40 secured to the member 15 carries an engagement formation in the shape of a somewhat bullet-nosed projection 41. The projection 41 has a groove 42 in its underside. The transverse frame member 50 also carries two resilient abutment members 43, e.g. of rubber or rubber-like material. Figure 4 shows the front wall 37 of the chassis structure 32 of the removable drive assembly of the wheelchair. It carries a transversely extending bar 45 of metal, whose ends are provided with respective collars 46 which are a close fit within the recesses 18a, followed by end caps 47 extending radially and axially outwardly from the collars 46. Just beneath a top flange 48 of the wall 37 the wall has an aperture through which the projection 41 can extend, and a catch member 49 is pivotally mounted to the wall 37 so as to be engageable with the groove 42 in the underside of the projection when the projection is fully entered in the aperture in the wall 37. The catch member 49 is spring biased to engage the groove 42, and a release lever 50 is operable on the catch member 49 to pivot it, against its biasing spring, out of engagement with the groove 42. The release lever 50 can be operated by a member 51 extending upwardly therefrom, and through the top flange 48, to a position in which it is accessible to a person wishing to disconnect the drive assembly of the wheelchair from the remainder thereof.

When the two frame parts of the wheelchair, i.e. the front frame part 10 and drive assembly 11, are disconnected from one another, the position of the centre of gravity of the drive assembly is such that it rests on its wheels 30 and rear support wheels 33, with the front of the drive assembly somewhat upwardly tilted. The frame part 10 can then be presented to the drive assembly with the members 18 being lowered onto the collars 46 on the ends of the bar 47 so that the collars enter the recesses 18a. The end caps 47 provide some guidance in the direction lengthwise of the bar 45, to facilitate this engagement. When the hook formations are thus engaged with the engagement members afforded by the collars 46, the two parts of the wheelchair are constrained to angular movement relative to one another about the longitudinal axis of the bar 45. Because the front of the drive assembly is tilted upwardly, the projection 41 is facing but is clear of the aperture in the wall 37 in which it is engageable. Pressing downwardly on the members 18, or on the rear part of the members 14, or on the transverse member 15, causes pivotal movement between the two parts of the wheelchair to take place until the projection 41 enters the aperture in the wall 37 and in the course of such entry the catch member 49 is displaced against its biasing spring until the slot 42 in the underside of the projection 41 aligns with the catch member, whereupon the catch member enters the slot under the action of its biasing spring. As this condition has been approached, the rubber abutment members 43 have been compressed between the member 15 and the wall 37. The forces they exert between the member 15 and wall 37 as a result of this compression ensures that the connected parts remain in firm and rigid engagement with no play therebetween.

When the parts of the wheelchair are to be separated again, depression of the member 51 releases the catch member 49 from the projection 41, after which separation is effected by a reverse of the assembly process.

The invention thus provides an extremely simple, robust, and easily operable releasable connection between first and second frame parts of a vehicle for personal mobility such as a wheelchair.

In the present specification "comprises" means "includes or consists of" and "comprising" means "including or consisting of".

## Claims

1. A vehicle for personal mobility, including first and second frame parts (10, 11) respectively provided with ground-engaging wheels (17, 30) and having inter-engaging formations providing a releasable connection between the frame parts; the formations comprising respective first formations (18, 18a; 46, 47) on the frame parts, which formations when engaged with one another constrain the frame parts (10, 11) to angular movement relative to one another about an axis (45a), and respective second formations (41, 49) spaced from the axis and which, when engaged with one another, hold the frame parts in a fixed relationship to one another in which the first formations cannot be disengaged; **characterised in that** the second formations include at least one projection (41) on one frame part engageable in at least one complementary recess in the other frame part (37) by said angular movement between the frame parts; and
at least one catch member (49) which is provided on the other frame part and is engageable with the at least one projection (41), for holding the projection(s) in the recess(es).

2. A vehicle according to claim 1 further **characterised in that**, when the first and second formations are engaged, resilient means (43) is engaged between the frame parts.

3. A vehicle according to claim 2 further **characterised in that** resilient means (43) comprises at least one resilient member spaced from said axis (45a) and arranged to be compressed between facing portions (15, 37) of the first and second frame parts when the second formations are engaged.

4. A vehicle according to any on of the preceding claims further **characterised in that** the frame parts (10,11) are front and rear frame parts, and the axis (45a) extends transversely of the vehicle.

5. A vehicle according to any one of the preceding claims further **characterised in that** the first formations comprise two recess formations (18a) spaced laterally of the one frame part (10) and complementary engaging members (46) spaced laterally of the other frame part (11) and engageable in the recess formations (18a).

6. A vehicle according to claim 5 further **characterised in that** the recess formations (18a) open downwardly so as to be able to be placed over the engaging members (46).

7. A vehicle according to claim 5 or claim 6 further **characterised in that** the engaging members (46) comprise end portions of a bar (45) extending transversely of the other frame part of the vehicle.

8. A vehicle according to any one of the preceding claims which is a wheelchair.

9. A vehicle according to claim 8 further **characterised in that** one of the frame parts (11) comprises a removable drive assembly.

## Patentansprüche

1. Fahrzeug für persönliche Mobilität, mit ersten und zweiten Rahmenteilen (10, 11), die jeweils mit Rädern (17, 30), die mit dem Boden in Eingriff stehen, versehen sind, und die ineinandergreifende Formationen aufweisen, die eine lösbare Verbindung zwischen den Rahmenteilen herstellen; wobei die Formationen jeweils erste Formationen (18, 18a; 46, 47) auf den Rahmenteilen umfassen, wobei diese Formationen, wenn sie miteinander in Eingriff stehen, den Rahmenteilen (10, 11) eine Winkelbewegung relativ zueinander um eine Achse (45a) vorgeben, und jeweilige zweite Formationen (41, 49), die einen Abstand von der Achse aufweisen, und die, wenn sie miteinander in Eingriff stehen, die Rahmenteile in einer festen Beziehung zueinander halten, in der die ersten Formationen nicht voneinander gelöst werden können; **dadurch gekennzeichnet, daß** die zweiten Formationen mindestens einen Vorsprung (41) auf einem Rahmenteil aufweisen, der durch die genannte Winkelbewegung zwischen den Rahmenteilen in mindestens eine komplementäre Aussparung in dem anderen Rahmenteil (37) in Eingriff gebracht werden kann, und
mit mindestens einem Verriegelungselement (49), das auf dem anderen Rahmenteil vorgesehen ist und das mit dem mindestens einen Vorsprung (41) in Eingriff gebracht werden kann, um den mindestens einen Vorsprung in der mindestens einen Aussparung zu halten.

2. Fahrzeug nach Anspruch 1, **dadurch gekennzeichnet, daß** dann, wenn die ersten und zweiten Formationen in Eingriff stehen, ein elastisches Mittel (43) zwischen den Rahmenteilen in Eingriff steht.

3. Fahrzeug nach Anspruch 2, **dadurch gekennzeichnet, daß** das elastische Mittel (43) zumindest ein elastisches Element aufweist, das in einem Abstand von der genannten Achse (45a) angeordnet und so eingerichtet ist, daß es zwischen zueinander weisenden Abschnitten (15, 37) der ersten und zweiten Rahmenteile zusammengedrückt ist, wenn die zweiten Formationen in Eingriff stehen.

4. Fahrzeug nach einem der vorangehenden Ansprüche, **dadurch gekennzeichnet, daß** die Rahmenteile (10, 11) vordere und hintere Rahmenteile sind, und daß sich die Achse (45a) quer zu dem Fahrzeug erstreckt.

5. Fahrzeug nach einem der vorangehenden Ansprüche, **dadurch gekennzeichnet, daß** die ersten Formationen zwei Aussparungsformationen (18a) aufweisen, die einen seitlichen Abstand von dem einen Rahmenteil (10) aufweisen, und komplementäre Eingriffselemente (46), die in seitlicher Richtung von dem anderen Rahmenteil (11) beabstandet sind und in die Aussparungsformationen (18a) in Eingriff bringbar sind.

6. Fahrzeug nach Anspruch 5, **dadurch gekennzeichnet, daß** sich die Aussparungsformationen (18a) nach unten öffnen, so daß sie in der Lage sind, über den Eingriffselementen (46) angeordnet zu werden.

7. Fahrzeug nach Anspruch 5 oder 6, **dadurch gekennzeichnet, daß** die Eingriffselemente (46) Endabschnitte einer Stange (45) umfassen, die sich in Querrichtung des anderen Rahmenteils des Fahrzeugs erstreckt.

8. Fahrzeug nach einem der vorangehenden Ansprüche, bei dem es sich um einen Rollstuhl handelt.

9. Fahrzeug nach Anspruch 8, **dadurch gekennzeichnet, daß** eines der Rahmenteile (11) eine abnehmbare Antriebsanordnung umfaßt.

## Revendications

1. Véhicule pour la mobilité d'une personne, comprenant des première et deuxième parties de châssis (10, 11) pourvues respectivement de roues d'engagement avec le sol (17, 30) et comportant des structures à engagement mutuel fournissant une connexion libérable entre les parties de châssis ; les structures comprenant des premières structures respectives (18, 18a ; 46, 47) sur les parties de châssis, lesquelles structures, une fois mutuellement engagées, contraignent les parties de châssis (10, 11) à un mouvement angulaire l'une par rapport à l'autre autour d'un axe (45a), et des deuxièmes structures respectives (41, 49) espacées de l'axe et qui, une fois mutuellement engagées, maintiennent les parties de châssis en une position fixes l'une par rapport à l'autre, dans laquelle position les premières structures ne peuvent être désengagées ; **caractérisé en ce que** les deuxièmes structures comprennent au moins une saillie (41), sur une partie de châssis, pouvant être engagée dans au moins un évidement complémentaire dans l'autre partie de châssis (37) par ledit mouvement angulaire entre les parties de châssis ; et
au moins un élément d'arrêt (49), qui est situé sur l'autre partie de châssis, et peut être engagé avec l'au moins une saillie (41), pour maintenir la saillie ou les saillies dans l'évidement ou les évidements.

2. Véhicule selon la revendication 1, **caractérisé en outre en ce que**, lorsque les première et deuxième structures sont engagées, un moyen élastique (43) est engagé entre les parties de châssis.

3. Véhicule selon la revendication 2, **caractérisé en outre en ce que** le moyen élastique (43) comprend au moins un élément élastique espacé dudit axe (45a) et agencé pour être comprimé entre des parties se faisant face (15, 37) des première et deuxième parties de châssis lorsque les deuxièmes structures sont engagées.

4. Véhicule selon l'une quelconque des revendications précédentes, **caractérisé en outre en ce que** les parties de châssis (10, 11) sont des parties de châssis avant et arrière, et l'axe (45a) s'étend transversalement au véhicule.

5. Véhicule selon l'une quelconque des revendications précédentes, **caractérisé en outre en ce que** les premières structures comprennent deux structures d'évidements (18a) espacées latéralement de la partie de châssis (10) et des éléments d'engagement complémentaires (46) espacés latéralement de l'autre partie de châssis (11) et pouvant être engagés dans les structures d'évidements (18a).

6. Véhicule selon la revendication 5, **caractérisé en outre en ce que** les structures d'évidements (18a) s'ouvrent vers le bas afin de pouvoir être placées sur les éléments d'engagement (46).

7. Véhicule selon la revendication 5 ou la revendication 6, **caractérisé en outre en ce que** les éléments d'engagement (46) comprennent des parties d'extrémité d'une barre (45) s'étendant transversalement à l'autre partie de châssis du véhicule.

8. Véhicule selon l'une quelconque des revendications précédentes, qui est un fauteuil roulant.

9. Véhicule selon la revendication 8, **caractérisé en outre en ce que** l'une des parties de châssis (11) comprend un ensemble d'entraînement amovible.
